Europäisches Patentamt

European Patent Office

Office européen des brevets

(19)

(11) Publication number: **0 026 109**

**A2**

# (12) EUROPEAN PATENT APPLICATION

(21) Application number: **80303357.0**

(22) Date of filing: **24.09.80**

(51) Int. Cl.³: **G 11 B 21/20**
**//G11B7/08**

(30) Priority: **25.09.79 JP 122925/79**

(43) Date of publication of application:
**01.04.81 Bulletin 81/13**

(84) Designated Contracting States:
**DE FR GB NL**

(71) Applicant: **VICTOR COMPANY OF JAPAN, LTD.**
**No. 12, 3-chome, Moriya-Cho Kanagawa-Ku**
**Yokohama-City Kanagawa-Ken(JP)**

(72) Inventor: **Shikunami, Juichi**
**4-6-3, Higashionuma Sagamihara-City**
**Kanagawa-ken(JP)**

(72) Inventor: **Honjoh, Yoshihiko**
**1832-13, Ayase-Machi Koza-Gun**
**Kanagawa-Ken(JP)**

(74) Representative: **Robinson, John Stuart et al,**
**Marks & Clerk 57/60 Lincoln's Inn Fields**
**London WC2A 3LS(GB)**

(54) **System for controlling recording and/or reproducing element in disc-shaped recording medium recording and/or reproducing apparatus.**

(57)   The present invention provides a system for controlling a recording and/or reproducing element with respect to a recording medium, particularly disc shaped recording media.

The control system comprises detection means (19, 31) for detecting the shift with respect to the regular position of the recording and/or reproducing element with respect to the recording element, control means for controlling the said element in accordance with the output of the detection means (19, 31) and memory and arithmetic means (36) for storing the output of the detection means (19, 31) in a memory and supplying a signal from the memory, upon the introduction of an abnormality on the surface of the recording medium, to the control means.

Preferably, storage in the memory is effected using a sampling pulse substantially synchronized with the rotation of the recording medium and the memory and arithmetic means (36) operates upon the output of the detection means (19, 31) in comparison with that output an integral number of samples previously in order to determine an abnormal state.

FIG. 2

- 1 -

## System for controlling recording and/or reproducing element in disc-shaped recording medium recording and/or reproducing appratus

This invention relates generally to systems for controlling recording and/or reproducing elements in disc-shaped recording medium recording and/or reproducing apparatuses, and more particularly to a system for controlling a recording and/or reproducing element capable of steadily controlling the relative position of the recording and/or reproducing element with respect to the disc-shaped recording medium.

Generally, in a reproducing appratus which optically reproduces an information signal such as a video signal from a disc-shaped recording medium (hereinafter referred to as disc) by a lazer beam, for example, an objective lens which concentrates the lazer beam on the disc surface is used as a reproducing element. In order for the recorded information signal to be reproduced accurately and properly, the space between the objective lens and the disc surface must be accurately maintained at a predetermined distance.

However, the disc surface generally formed is not completely dlat, and comprises some waveshaped unevenness. Furthermore, when the disc is placed on a turntable and rotated, wobbling of the disc surface is unavoidably introduced. Therefore, during each rotation of the disc, the space between the objective lens and the disc surface usually changes, and hence the height of the objective lens must be controlled with respect to the variation of the disc surface, to maintain the space between the objective lens and the disc surface constant.

Accordingly, the conventional control system for controlling the height of the objective lens was organized in the following manner. A pair of photo-detectors were used to receive a reflected beam from the disc, the output sinals of the pair of photo-detectors were supplied, through a differential amplifier, to an objective lens actuator accordingly to the output difference signal of the differential amplifier, to variably control the height of the objective lens with respect to the disc surface.

In this conventional system, the height of the objective lens is controlled even when there exist dust particles or scratches on the disc. Thus, during this controlling movement with respect to dust particles or scratches, proper information signal reproduction cannot be performed, and suffered further disadvantages in that in extreme cases, the lock of the servo control unlocked and the objective lens struck the disc surface.

Accordingly, a general object of the present invention is to provide a novel and useful control system for a recording and/or reproducing element in a disc-shaped recording medium recording and/or reproducing apparatus which has solved the above described problems.

Another embodiment of the present invention is to provide a system for controlling the recording and/or reproducing element, by storing the difference signal of the relative position of the surface of the disc-shaped recording medium and the recording and/or reproducing element in the memory, and, upon origination of an abnormality on the surface of the recording medium, utilizes the difference signal read from the memory to control the recording and/or reproducing element. According to the system of the present invention, a stable control of the recording and/or reproducing element can constantly be achieved regardless of an outbreak of abnormality on the surface of the recording medium.

Other objects and further features of the present invention will be apparent from the following detailed description with respect to preferred embodiments of the invention when read in conjunction with the accompanying drawings, in which:-

FIG.1 is a partial vertical sectional side view of a part of an example of a disc reproducing apparatus which can be apllied with the control system of the present invention;

FIG.2 is a systematic block diagram showing a first embodiment of the control system of the present invention;

FIG.3 is a flowchart for describing the operation of the control system of FIG.2;

FIG.4 is a systematic block diagram showing a second embodiment of the control system of the present invention;

FIG.5 is a flowchart showing the essential parts of the flowchart for describing a third embodiment of a control system of the present invention;

FIG.6 is a graph showing the relationship between the disc rotation and the error voltage; and

FIG.7 is a systematic block diagram showing a fourth embodiment of a control system of the present invention.

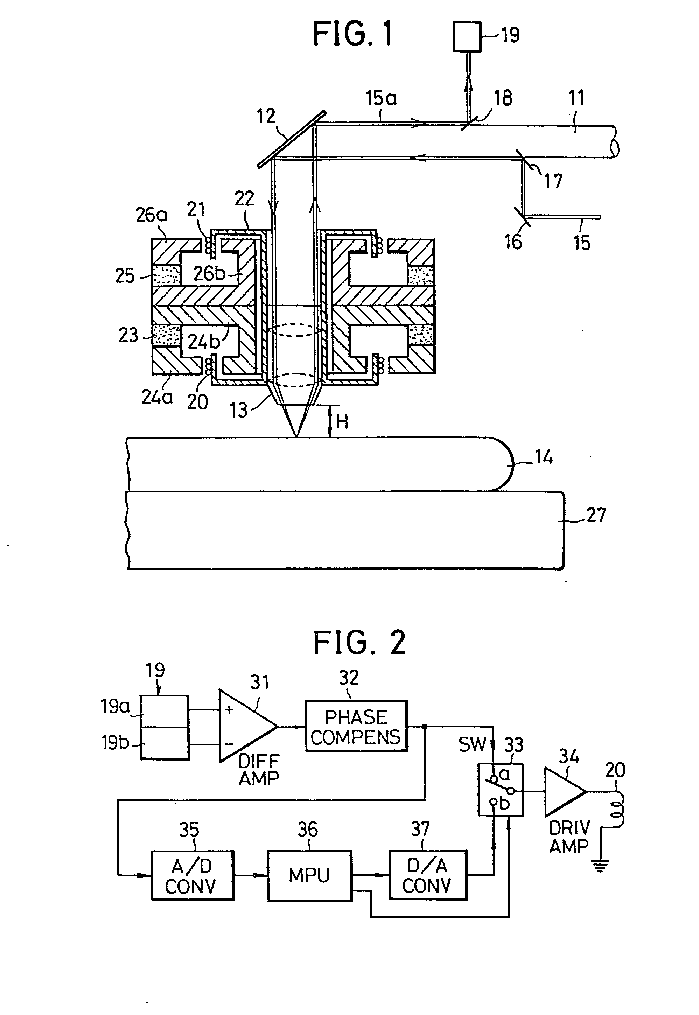

In FIG. 1, a lazer beam 11 for reproducing an information signal is reflected by a mirror 12, and concentrated on the surface of a disc 14 having recorded video signals thereon, by an objective lens 13. A control lazer beam 15 is reflected by mirros 16, 17, and 12, and concentrated on the surface of the disc 14 by the objective lens 13. The beam reflected by the disc 14 passes through the objective lens 13, and is reflected by the mirror 12. A reflected control beam 15a is reflected by a mirror 18 and sent to a detector 19.

A bobbin 22 having would a control coil 20 and a detection coil 21 therearound is fixed to the objective lens 13. Yokes 24a and 24b respectively have one of its ends stabilized by a permanent magnet 23, and the coil 20 is positioned between the gap formed by the other two ends of the yokes 24a and 24b. Similarly, yokes 25a and 25b respectively have one of its ends stabilized by a permanent magnet 25, and the coil 21 is positioned between the gap formed by the other two ends of the yokes 25a and 25b.

By applying a control current through the control coil 20, the bobbin 22 receives a displacement force, and along with this, the objective lens 13 undergoes displacement, and the space

- 4 -                                                0026109

between the objective lens 13 undergoes displacement, and the space between the objective lens 13 and the surface of the disc 14 is controlled so that the distance between them is held constant at a distance $\underline{H}$. Furthermore, when the coil 21 undergoes a displacement together with the displacement of the bobbin 22, a detection current is introduced.

The detector 19 is of a known construction, and comprises a pair of photo-detectors. When the above distance $\underline{H}$ is of a normal predetermined value, the detector 19 is organized so that the reflected beam 15a is provided evenly in quantity to the pair of photo-detectors. When the value of the distance $\underline{H}$ is of a value different from that of the predetermined one due to the wobbling of the disc surface and the like, the path on which the reflected beam 15a travels shifts from the regular path, and the respective quantity of the beam provided to each of the photo-detectors of the detector 19 varies.

As shown in FIG.2, the detection output of a pair of photo-detectors 19a and 19b of the detector 19 is supplied to a differential amplifier 31. When the above distance $\underline{H}$ is of a regular value, signals of same electric potential (same current level) are obtained from the photo-detectors 19a and 19b, and the output of the differential amplifier 31 is zero. However, when the value of the distance $\underline{H}$ shifts from the regular value, the output voltages (currents) of the photo-detectors 19a and 19b are different, and an error output voltage is obtained from the differential amplifier 31.

The output of the differential amplifier 31 is compensated of its phase lag by a phase compensation circuit 32, and supplied to a contact $\underline{a}$ of an electronic switch 33 shown sectionally, as well as to an analog-to-digital (A/D) converter 35. The phase compensation circuit 32 is of a known construction, comprising a differentiation circuit which advances and operates on the phase. The signal of the control loop, and the phase lag of the control loop operation is compensated by the compensation circuit 32.          The output signal of the A/D converter 35 is supplied to a microprocessor unit (MPU) 36 comprising control, arithmetic operation, and memory capabilities.

The output signal of the MPU 36 is supplied to a contact b of the electronic switch 33 through a digital-to-analog (D/A) converter 37. The electronic switch 33 changes over to the connection to either of the contacts a or b, according to the instruction given by the MPU 36 as latter described. The signal which has passed through the electronic switch 33 is supplied to the control coil 20 through a driving amplifier 34.

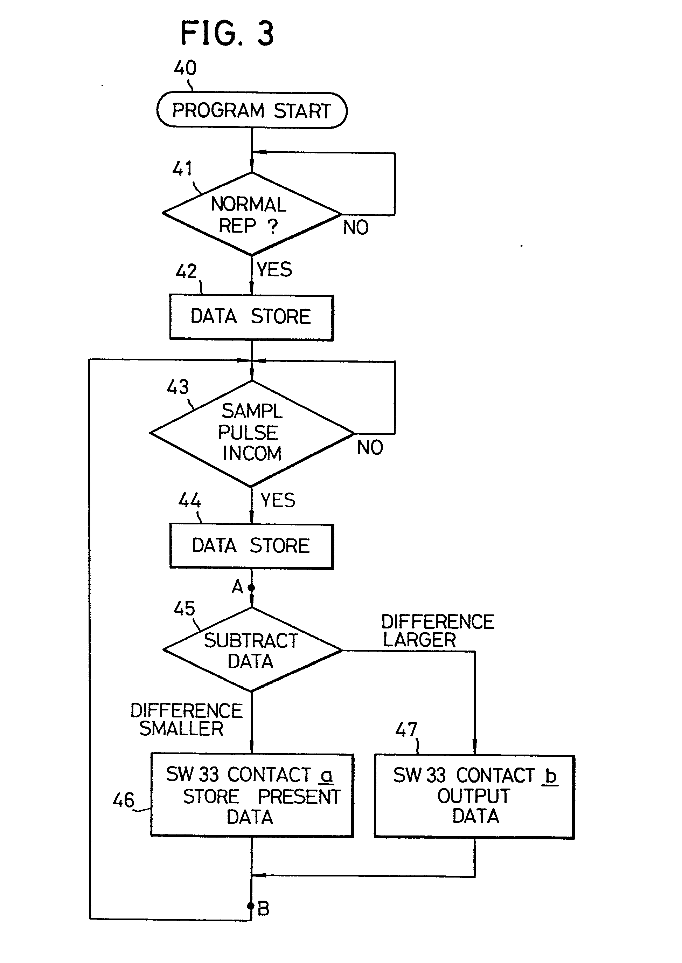

Next, the operation of the MPU 36 will be described in conjunction with FIG.3. First, before the initiation of the control operation, the program is started at a step 40, and judged whether the reproducing apparatus is in the normal reproducing mode or not by a step 41. As necessary conditions for judgement of the this normal reproduction, there are the rotational speed of the turntable 27 having the disc 14 placed thereon, the focus servo mechanism of the beam, the tracking servo mechanism of the beam, the information reproducing level, and the like.

When the result of the judgement in the step 41 is "NO" and the mode is not in a normal reproducing mode, the judgement procedure is repeated until the normal reproducing mode is performed, by going into a waiting loop shown by "NO" in FIG.3. When the reproducing apparatus performs normal reproduction and the result of the judgement in the step 41 is "YES", the data for one rotation obtained by averaging the data obtained from each of the 2 to 100 rotations of the disc 14 is stored in a predetermined address, by performing a next step 42. By these procedures, the initial set up is completed.

In the next stage, the control operation is performed, in which the incoming sampling pulse is judged by a step 43. Here, the sampling pulse is obtained, for example, by counting down the frequency of the horizontal synchronizing signal in the video signal to one-fifth the frequency. The turntable 27 is, for example, rotated at a rotational speed of 15 rotations per second, by using the above horizontal synchronizing signal as the its basis.  Accordingly, the frequency of the sampling pulse is synchronized with the rotation of the disc 14.

In the event when there are no incoming sampling pulses of the predetermined frequency, the resulting judgement by the step 43 is "NO" , and the judgement is repeated until there is an incoming sampling pulse, by going into a waiting loop.  When there is an incoming sampling pulse and the resulting judgement is "YES" , the data for one rotation of the disc 14 obtained from the A/D converter 35 is sampled by the above sampling pulse and stored into the memory circuit, by performing a step 44.

In a step 45, subtraction is performed between the present data and the data of $M$ samples before, and judgement is performed on whether the resultant value from subtraction is larger or smaller than the predetermined value.  The value for $M$ , for example, is 1 to 10.  When the resultant value from subtraction is smaller than the predetermined value, the state is in a normal state, and proceeds to a next step 46.  In the step 46, a switch control signal is applied to the contact a of the electronic switch 33 by the MPU 36.  At the same time, the MPU 36 stores the present data in a predetermined address of the memory.

On the other hand, when there exist dust particles or scratches on the surface of the disc 14, the output difference voltage of the differential amplifier 31 becomes of an abnormally large value.  Therefore, in this case, the resultant value from ubtraction is judged as being larger than the predetrmined value by the step 45, and then proceeds to a next step 47.  In the step 47, a switch control signal is applied to the electronic switch 33 to change over the switch to the side of contact b, from the MPU 36.  At the same time, the MPU 36 supplies a data of $M$ samples before the present to the D/A converter 37.  And, upon this introduction of this abnormal state, the step 46 is skipped and the next step 47 is performed, and hence the data at this abnormal point is not stored in the memory.

After the operation of the steps 46 and 47, the operation of the step 43 is once again performed, and the above described operations are repeatedly performed.

Thus, in the event when there exist no abnormalities, the error output of the differential amplifier 31 which has passed the phase compensation circuit 32 passes through the electronic switch 33 connected at the contact $\underline{a}$ , and is applied to the control coil 20 through the driving amplifier 34. Accordingly, the objective lens 13 is controlled so that the distance $\underline{H}$ is always held at a constant value, regardless of the wobbling introduced to the surface of the disc 14, or the waveshaped unevenness of the disc surface and the like.

On the other hand, upon detection of the abnormal state when there do exist dust particles or scratches on the surface of the disc 14, a data of $\underline{M}$ samples beofre the present (abnormal state) is provided as output from the MPU 36, and through the D/A converter 37, this signal passes through the switch 33 connected at the contact $\underline{b}$ and is then applied to the coil 20. Therefore, the objective lens 13 is not driven by the abnormality detection output, and hence the objective lens 13 does not move unusually far apart from or close to the disc 14, introducing no inconveniences as in the extreme cases of the conventional system in which the objective lens 13 might strike the surface of the disc 14.

Furthermore, upon still picture reproduction, the electronic switch 33 can be changed over to the contact $\underline{b}$ connection, so that the data for one rotation once stored by the MPU 36 is repeatedly provided as output.

The present embodiment is organized so that the MPU 36 provides as output a data of $\underline{M}$ samples before, upon detection of the abnormal state, but it can be organized so that the data of $\underline{K}$ ($\underline{K}$ is an integer equal to or larger than one) disc rotations before is provided as output. The varying conditions of the disc surface is relatively similar at the neighboring tracks in the same radial direction, and hence this second method may be better in some occasions.

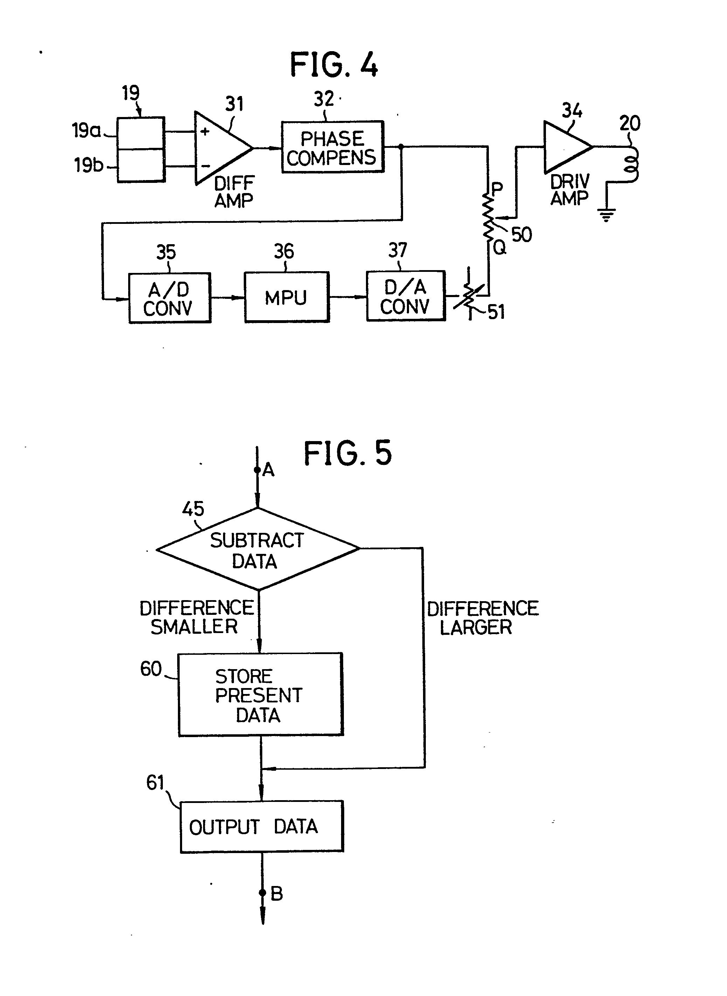

A second embodiment of a control system of the present invention will now be described in conjunction with FIG.4. In FIG.4, those parts which are the same as those parts corresponding to FIG.2 will be designated by the like reference numerals, and their description will be omitted.

In the above first embodiment, when the electronic switch 33 is connected at the contact b , the signals read from the MPU 36 are applied to the control coil 20, and thus the control system becomes an open loop system. Hence in this second embodiment, the system is organized so that a closed loop is constantly added as opposed to the open loop, to improve the improvement factor with respect to the remaining error of the control operation.

The phase compensation circuit 32 is connected to one end P of a variable resistor 50, and the D/A converter 37 is connected to the other end Q of the variable resistor 50 through a gain adjustment variable resistor 51. The slider of the variable resistor 50 is connected to the driving amplifier 34.

When the slider of the variable resistor 50 is positioned between the ends P and Q , the present error output signal from the differential amplifier 31 which has passed through the phase compensation circuit 32, and the signal from the MPU 36 which has passed through the D/A converter 37 is mixed by the variable resistor 50 by a suitable mixing ratio, and then supplied to the driving amplifier 34.

In order for the lock of the control operation in the control system not to disengage, the position of the slider of the variable resistor 50 is adjusted, and the mixing ratio at the variable resistor 50 is also adjusted.

Upon setection of the above abnormality, the MPU 36 provides as output a data of M samples before, as in the first embodiment of the present invention.

An example of another usage of the system shown in the systematic diagram of FIG.4 will now be described. First, the slider of the variable resistor 50 is positioned at the side of end $\underline{P}$. At this moment, the system is the same as that of the conventional control system containing no loops comprising the MPU 36, and the improvement factor of the control by the output error voltage supplied by the phase compensation circuit 32 in this state is designated by $\underline{K}$. Next, the gain is adjusted by adjusting the variable resistor 51 so that the voltage at the other end $\underline{Q}$, upon positioning of the slider of the variable resistor 50 to the end $\underline{Q}$, is $( 1 + \frac{1}{K} + \frac{1}{k^2} )$ times the error voltage at the end $\underline{P}$.

Theoretically, it is desirable to set the voltage at the end $\underline{Q}$ to $( 1 + \frac{1}{K} + \frac{1}{k^2} + \frac{1}{k^3} + --- )$ times the error voltage at the end $\underline{P}$, but obtaining such magnification accurately is difficult, and from the practical point of view, satisfactory improvement factor can be obtained by the magnification $( 1 + \frac{1}{K} + \frac{1}{k^2} )$.

A third embodiment of the present invention will now be described in conjunction with FIG.5. The systematic block diagram for this third embodiment ia the same as that shown in FIG.2 and 4, and thus its illustration will be omitted. The differring point of this embodiment from the above embodiments is the operation of the MPU 36, and when applied to a system shown in the systematic block diagram of FIG.4, the flowchart for this operation differs from that shown in FIG.3 between the points $\underline{A}$ and $\underline{B}$. However, all the other steps are the same as that of the other embodiments, and therefore the illustration of the whole system will be omitted and only the differring steps between the points $\underline{A}$ and $\underline{B}$ of FIG.3 will be shown in FIG. 5.

In the step 45, similarly to the operation described in conjunction with FIG.3, subtraction is performed between the present data and the data of $\underline{M}$ samples before, and judged whether the resultant value of this sutraction is larger or smaller than the predetermined value. In the event the resultant value of this sutraction is smaller than the predetermined value, the present data is stored in a predetermined address of the memory, by advancing to a next step 60. By proceeding to a next step 61, a data of $N$ samples before ($N$ is, for example, 1 to 10) the point one disc rotation before the present, is supplied as output, and supplied to the D/A converter 37.

When the resultant value of the subtraction is judged as being larger than the predetermined value (that is, when abnormal state is detected), the step 60 is skipped without storing the present data in the memory, and moves on to the next step 61.

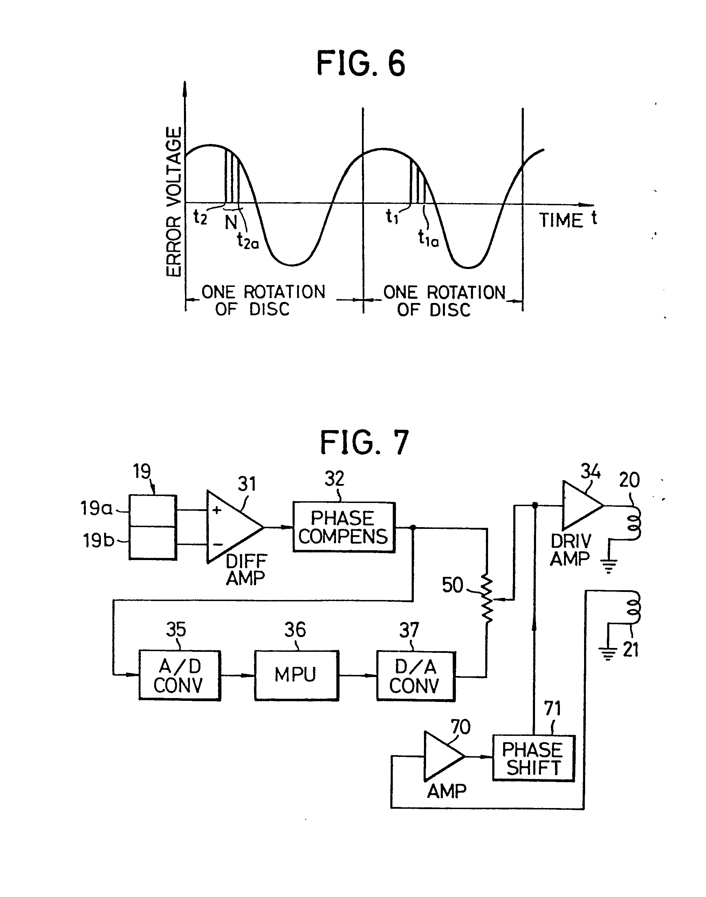

Generally, in control systems, the phase lag of the comprising elements of the control loop is a problem. However, in this embodiment of the invention, the problem concerning this phase lag is resolved. In order not to introduce the phase lag, the information at time $t_{1a}$ beyond the present time $t_1$, as shown in FIG.6, must be used upon control. But in reality, obtaining information beyond the present time is impossible.

However, as stated above, the information at one particular point in time and that of exactly one disc rotation before that particular point in time has a high correlation. Accordingly, the information at time $t_{1a}$ beyond the present time $t_1$ by $N$ ($N$ is, for example, 1 to 10) samples, and the information at time $t_{2a}$ beyond the time $t_2$, which is before the present time $t_1$ by one disc rotation, by $N$ samples closely resemble each other. Therefore, there is no hindrance in a practical point of view, when the information at time $t_{2a}$ is used instead of the information at time $t_1$.

Accordingly, a difference signal at time $t_{2a}$ which can in reality be considered as an advanced phase component from time $t_1$, closely resembling the value as that at time $t_{1a}$ beyond the present time $t_1$, is applied to the coil 20, and thus, phase lag is not introduced upon the operation of the control system. Furthermore, the $N$ values of the above $N$ samples are selected in accordance with the phase advancement to correct the above phase lag.

Upon application of this third embodiment of the invention to the systematic block diagram of FIG. 2, abnormality is detected and the electronic switch 33 is switched over to the contact $b$ side, and the system is organized so that the MPU 36 produces as output a signal at time $t_{2a}$ with respect to time $t_1$.

Next, a fourth embodiment of the present invention will be described in conjunction with FIG. 7, wherein this fourth embodiment is a control system of FIG. 4 which has been added with a control loop to detect the mechanical vibration of the reproducing apparatus and control so that variation in the distance $H$ is not introduced by this mechanical vibration of the reproducing apparatus. In FIG. 7, those parts which are the same as those corresponding parts in FIG. 4 are designated by the like numerals, and their description will be omitted. In addition, this control loop can be added to the embodiment of the control system shown in FIG. 2.

Let us assume that mechanical vibrations are applied to the reproducing apparatus, and mechanical vibrations are directly or indirectly applied to the objective lens 13. Upon up-and-down displacement of the objective lens 13 introduced by this vibrations, the detection coil 21 undergoes displacement in the magnetic field, and a detection signal is obtained from the coil 21.

The detection signal from the detection coil 21 is added to the signal from the variable resistor 50 through an amplifier 70 and a phase correction circuit 71, and supplied to the coil 20 through the driving amplifier 34. Thus, the objective lens 13 is controlled so as to control the vibration.

Next, an embodiment in which arithmetic operation to decrease the noise component is performed by the MPU 36, will be described.

In this embodiment, instead of the storing the data in the memory by steps 46 and 60 shown respectively in FIGS. 3 and 5, for example, the average value between the data at time $t_1$ upon storing of the data, and the data at time $t_2$ corresponding to the data of one disc rotation before the time $t_1$, is stored. Accordingly, in the step 45, subtraction between the averaged data already obtained above, and the data at the present time (at a point in time one disc rotation after the time $t_1$) $to_0$ is performed.

Averaging is performed upon storing of the data in steps 46 and 60 above, thus the noise component not synchronized with the rotation of the disc is decreased, data access with high S/N ratio can be performed, and a control very little affected by noise can therefore be performed.

The above averaged data can be obtained by averaging the data at time $t_1$ and the data at each of the time, for example, 2 to 100 disc rotational before the time $t_1$.

In each of the above embodiments, the phase correction circuit 32 can be connected between the electronic switch 33 or variable resistor 50 and the driving amplifier 34.

Furthermore, in the above description of the embodiments, the control system of the present invention was applied to an objective lens of an optical reproducing apparatus, but the present invention is not limited and can be applied to an optical recording apparatus, and also to control the recording and/or reproducing elements of a recording and/or reproducing apparatus other than the optical type.

Further, this invention is not limited to these embodiments but various variations and modifications may be made without departing from the scope of the invention.

Claims:

1. A control system in a recording and/or reproducing apparatus having an element for recording and/or reproducing a signal on and/or from a disc-shaped recording medium, characterized in that there are provided: detection means (19, 31) for detecting the shift with respect to the regular position of the relative position of said recording and/or reproducing element (13) with respect to said recording medium (14), control means (20, 22, 23, 24a, 24b) for controlling so as to set the relative position of said recording and/or reproducing element with respect to said recording meidum as the regular position according to the output detection error signal of said detection means; and memory and arithmetic operation means 936) for storing the output detection error signal of said detection means in a memory and supplying the error signal read from said memory upon introduction of an abnormality on the surface of said recording medium to said control means.

2. A control system as described in claim 1, characterized in that said memory and arithmetic operation menas (36) stores said error signal in said memory by using a sampling pulse substantially synchronized to the rotation of said recording medium, performs subtraction between an error signal at one particular point in time and that of $M$ ($M$ is an integer) samples before that particular point in time, performs judgement that the state is in an abnormal state when the resultant value from subtraction is larger than a predetermined value, and supplied the detection error signal read from said memory to said control means.

3. A control system as described in claim 2, characterized in that said memory and arithmetic operation means (36) supplies the detection error signal read from said memory of $M$ ( $M$ is an integer) samples before said particular point in time, upon judgement of said abnormal state.

4. A control system as described in claim 2, characterized in that said memory and arithmetic operation means (36) supplies the detection error signal read from said memory of a point in time $P$ ($P$ is an integer including unity) rotations of said recording medium before said particular point in time, upon judgement of said abnormal state.

5. A control system as described in claim 2 characterized in that said memory and arithmetic operation means (36) supplies the detection error signal read from said memory of $N$ ($N$ is an integer) samples before said point in time $P$ ($P$ is an integer including unity) rotations of said recording medium before said particular point in time, upon judgement of said abnormal state.

6. A control system as described in claim 1, characterized in that said memory and arithmetic operation means (36) samples said error signal by using a sampling pulse substantailly synchronized to the rotation of said recording medium, averages the output detection signals at each sampling instants and points in time $P$ ($P$ is an integer including unity) rotations of said recording medium before said sampling instants, and stores said averaged value into said memory.

7. A control system as described in claim 1, characterized in that said memory and arithmetic operation means (36) does not store in said memory, the detection error signal at the point in time upon said judgement of abnormality state.

8. A control system as described in claim 1, characterized in that there is further provided changeover means (33) for selectively supplying the output detection error signal of said detection means and the detection error signal read from said memory by said memory and arithmetic operation means to said control means, said memory and arithmetic operation means supplying the detection error signal read from said memory by said memory and arithmetic operation means to said control means upon said abnormal state and at other instances applying a changeover control signal to said changeover means to supply the output detection error signal of said detection means to said control means.

9. A control system as described in claim 1, characterized in that there is further provided means (50) for mixing the output detection error signal of said detection means and the detection error signal read from said memory by said memory and arithmetic operation means with a preferable mixing ratio, and supplying said mixed signal to said control means.

10. A control system as described in claim 1, characterized in that said memory and arithmetic operation means (36) reads the detection error signal stored in said memory and supplies a signal $(1 + \frac{1}{k} + \frac{1}{k^2})$ ($\underline{k}$ is the improvement factor) times said read signal to said control means.

11. A control system as described in claim 2, characterized in that said information signal is a video signal including the horizontal synchronizing signal recorded on or reproduced from said recording medium, said recording medium is rotated at a rotational speed respective of the horizontal synchronizing signal frequency, and said sampling pulse frequency is selected at one-fifth the frequency of said horizontal synchronizing signal.

12. A control system as described in claim 1, characterized in that there is further provided means (21) for detecting the vibration of said recording and/or reproducing element, and that a signal corresponding to said detected vibration is supplied to said control means.

# FIG. 1

# FIG. 2

FIG. 3

2|4

0026109

40 PROGRAM START

41 NORMAL REP ? — NO

YES

42 DATA STORE

43 SAMPL PULSE INCOM — NO

YES

44 DATA STORE

A

45 SUBTRACT DATA — DIFFERENCE LARGER

DIFFERENCE SMALLER

46 SW 33 CONTACT a STORE PRESENT DATA

47 SW 33 CONTACT b OUTPUT DATA

B

# FIG. 4

19

19a
19b

31

DIFF AMP

32

PHASE COMPENS

34

DRIV AMP

20

P

50

Q

35

A/D CONV

36

MPU

37

D/A CONV

51

# FIG. 5

A

45

SUBTRACT DATA

DIFFERENCE SMALLER

DIFFERENCE LARGER

60

STORE PRESENT DATA

61

OUTPUT DATA

B

## FIG. 6

ERROR VOLTAGE

$t_2$  N  $t_{2a}$  $t_1$  $t_{1a}$  TIME t

ONE ROTATION OF DISC    ONE ROTATION OF DISC

## FIG. 7

19
19a
19b

31
+
−
DIFF AMP

32
PHASE COMPENS

34
DRIV AMP

20

21

50

35
A/D CONV

36
MPU

37
D/A CONV

70
AMP

71
PHASE SHIFT